# EUROPEAN PATENT APPLICATION

(11) **EP 3 524 664 A1**
(43) Date of publication of application: **14.08.2019**
(21) Application number: 19386001.2
(22) Date of filing: 03.01.2019
(51) Int. Cl.: C11B 1/06, B30B 9/02

(54) **BY ROAD MOVABLE LABORATORY PASTING FRUITS WITH OILY FLESH BY THE METHOD OF HYDRAULIC DIRECT COLD PRESS**

(30) Priority: 08.01.2018 GR 20180100006
(71) Applicant: Tzanakakis, Stylianos, 741 32 Rethymno Crete (GR)
(72) Inventor: Tzanakakis, Stylianos, 741 32 Rethymno Crete (GR)

(57) **Abstract**

By road movable laboratory pasting fruits with oily flesh by the method of hydraulic direct cold press.

This invention relates to a road movable laboratory pasting fruits with oily flesh by the method of hydraulic direct cold press, by which method is given the ability to have (a) pulping of the fruits by means of hydraulic compression (b) production of cold pressed pulps and pastes (c) production of olive paste without the use of salt or brine (d) production of debittered olive paste in just a few hours after considering also the harvesting time (e) avoidance of the peel removal processing phase for all categories of fruits and (f) avoidance of the environmental problems caused by debbitering of olive fruits in brine.

The laboratory will be housed in an metal container (MEEK) with roof openings/inner foldable door leaves/foldable tent and foldable floor and will be equipped according to Fig. 39 and Fig. 40 with suitably arranged electrically powered and power assisted machinery (YP, TK, DFE, PK), and paste tanks (DPOL, DPHL1, DPHL2, DPHL3, DPHL4). The laboratory will be able to (a) be installed in the fields (b) to store the produced pastes (c) to use the same equipment and basic machinery when pasting any kind of fruit (d) to face at the fields the problem of managing both the washing water and of the solid residues by their disposal to the ground and (e) to produce top quality pastes with also minimizing the total pasting time.

## Description

This invention concerns a complete, by road movable, laboratory pasting fruits with oily flesh by the method of hydraulic direct cold press, whose machinery and equipment are appropriately arranged and housed in a specially designed metal container, able to be transported (self-moving or trailer) and be installed in fields of fruit trees .
Today the oily fruits pasting procedure includes substantially two phases, the one of pulping the fruits and the one of the pasteurization of the pulp. Especially in the case of olive pastes , the above two phases procedure take place after the fundamental phase of debittering the fruits (mainly due to high levels of oleuropein) which concerns the keeping of the fruits immersed in brine tanks for a period of time of over six weeks (with intermediate changes of brine) and finally the rinsing of the fruits to remove salt.
Regarding the pulping of fruits with oily flesh, there exist several industrial and artisan processes on the market which use either the screw press compression method of flesh , either the cutting of the flesh by high-speed rotating blades, or even the scraping of the flesh in rotating drums, however there are no hydraulic compression processes. Concerning the pasteurization, there exist in the market two basic methods, the one of thermal pasteurization (when the pastes are mainly intended for nutritional purposes) and the one of ultra-high-pressure pasteurization when the pastes are intended for the pharmaceutical and cosmetics industry.
In the pastes market for nutritional / cosmetic and pharmaceutical purposes is known the value and the importance of low temperature and low impact from light and ambient air procedures , in order not to degrade the qualitative natural and chemical characteristics of the processed fruit.
During the pasting processes, there must be faced among others the problem of solid and liquid waste management. This need for facing at the source the problem of solid and liquid waste of pasting process has become now imperative.
Also, until today, the management of rinsing and washing water of fruits at the beginning of the pasting process, includes partial recycling during the washing phase and their disposal to the municipal sewer system.
The method of hydraulic direct compression of the fruits flesh will be able to produce paste of top quality while at the same time the rinsing water and the solid residues / waste from the whole process can be disposed to the fields of fruit trees.

Today there are two basic methods of fruit pasting. For fruits such as avocados where the kernel can be removed, the pasting process comprises the following steps: (a) Unloading of fruits (b) Checking of fruits (c) Storage (d) Washing (e) Cutting to remove the kernel (f) Removal of the peel (g) Malaxation of the flesh (h) Extrusion by rotating screw through perforated discs (i) Cutting with rotary cutters and (j) Storage. For fruits such as olives where the kernel cannot be removed, the pasting process comprises the following steps: (a) Unloading the fruits (b) Checking of the fruits (c) Storage (d) Removal of leaves and small pieces of branches (e) Washing (f) Malaxation (g) Extrusion by rotating screw through perforated discs (h) Cutting with rotary cutters and (i) Storage.
The basic criteria of paste quality are the organoleptic characteristics (odor and taste), the oxidation, the color, the polyphenols as well as the lipophilic components such as the squalene, a-tocopherol, the carotenoids and the chlorophylls. From these, the oxidation and the phenolic content which also constitute fundamental qualitative characteristics for all paste applications, are mainly determined by the quality of fruits during the pulping process, which quality of fruits is directly related to (a) the storage conditions with needs for adequate ventilation and absence of light (b) the avoidance of damaging the peel and (c) the minimization of the time between the harvesting and pulping / pasting phases (the minimization of which time is also one of the fundamental advantages of the invention).

The intended purpose of the applicant for the above object of the invention is (a) the production of top quality pulps under constantly lower temperatures than 27 ° C (b) the production of pulps with a high processing efficiency per gross fruit weight, taking almost the whole of the fruits flesh , without having at the same time the need to remove the peel (which process inevitably leads to loss of flesh) (c) the minimization of the pulping & pasting time, enabling the process to take place on the fields of fruit trees (d) the ability for production of olive pastes where during the debittering process of olive fruits , there will be no need to use brine, for avoiding the many problems that are caused by its use such as : (d1) degradation of the pastes quality (d2) dramatic increase in the total pasting time and in water consumption, and (d3) the environmental management of saline waters as coming from the rinsing of brine from fruits peel and (e) the solution of the problem of managing the washing water and the produced solid waste / residues , by their direct disposal to the fields of fruit trees

The object of the invention is achieved with the appropriate design and arrangement of the Machinery (Hydraulic Press / Separator / Cutter / Washer / Pasteurizer etc.) and the Equipment (Tanks etc.), which will be housed in a appropriately designed metal container, with the possibility of road transport through a standard truck or trailer.

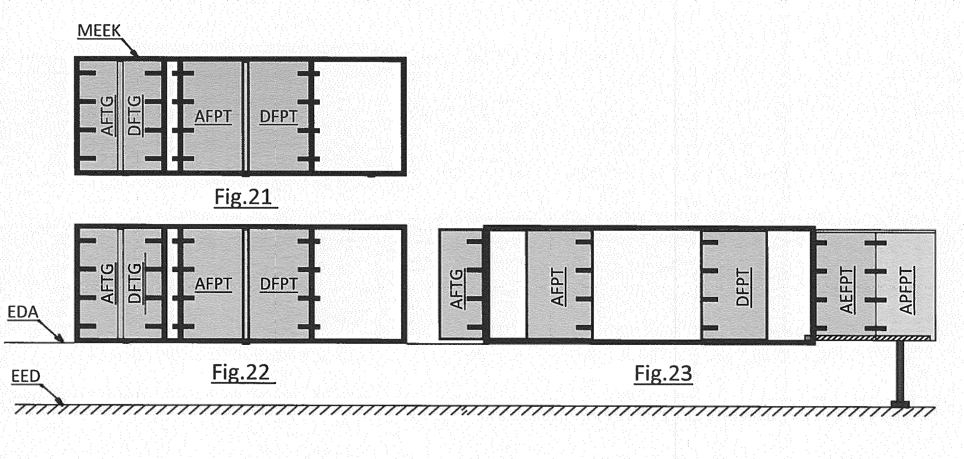

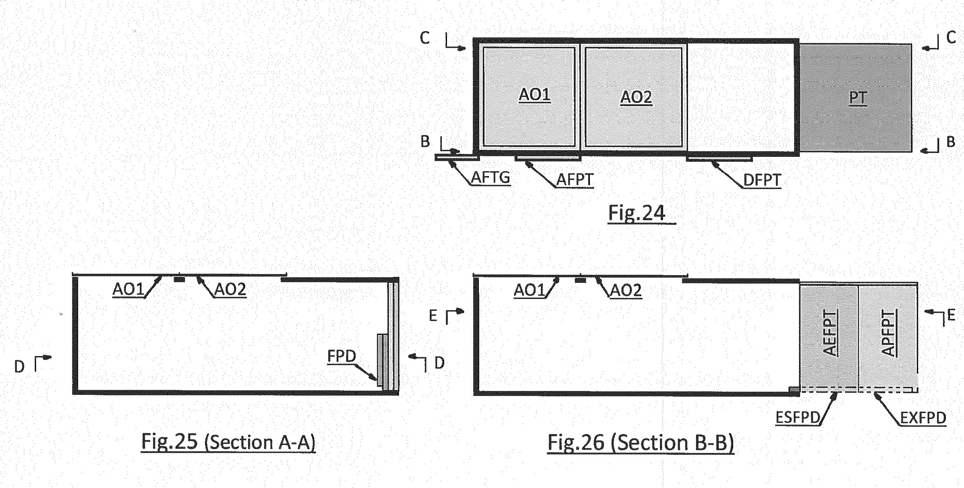

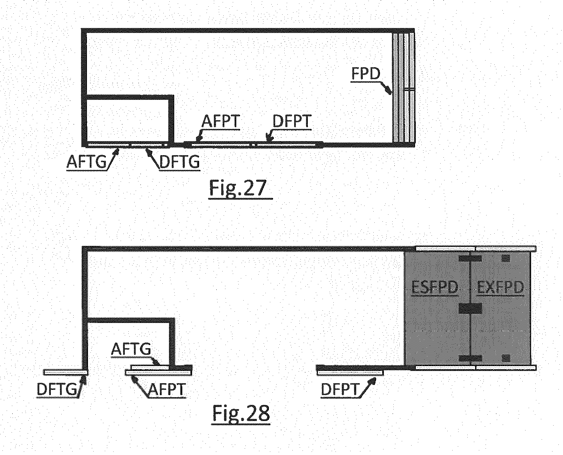

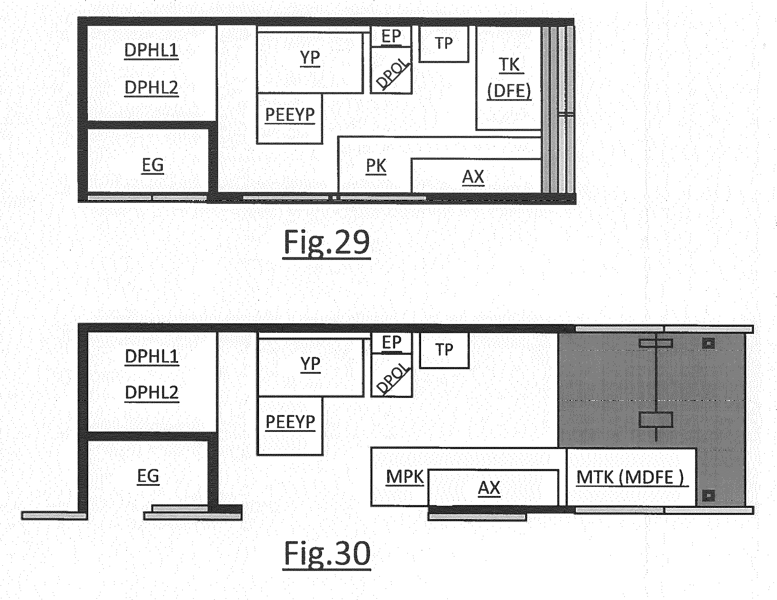

In a specific variant of the Laboratory of the invention, it is possible to modify the container appropriately so that in the position of the two out of four paste storage tanks to be installed an Electric Generator with a special partition and additional side openings / doors (of appropriate capacity in accordance with the attached Fig. 21 to Fig. 30). This modification, while depriving part of the processing capacity (as regards the ability for self-transporting of the produced paste), nevertheless provides the movable laboratory with the ability to have housed the required electric generator (so that it is not transported by a separate wheeled vehicle). Of course, depending on the distance and the degree of difficulty for the movable laboratory to access the fields of fruit trees , will be assessed accordingly the possibility to choose the proper type of truck (of allowed size according to current road legislation).

Also, in a particular variant of the Laboratory of the invention, the degree of separation of the produced pastes may be varied based on the design of the dimensions and number of the storage tanks. The degree of separation will depend on the geographical area of activity of the laboratory of the invention, since in case of operating in areas with small lots there will be the need to separate the pulps / pastes produced daily from different fields or even from the same in case the variety of trees is different.

Also, in a particular variant of the Laboratory of the invention, the number of foldable floor panels and of foldable door leaves of the rear double-leaf door may vary, depending on the size of the extended foldable processing space of fruits, desired to be created. For example, the foldable floor may consist of a total of three panels and each side of the rear double-leaf door may have two inner foldable panels/leafs, but in the specific processing area may have been selected to open / expand only the two foldable floor panels and one inner foldable door panel.

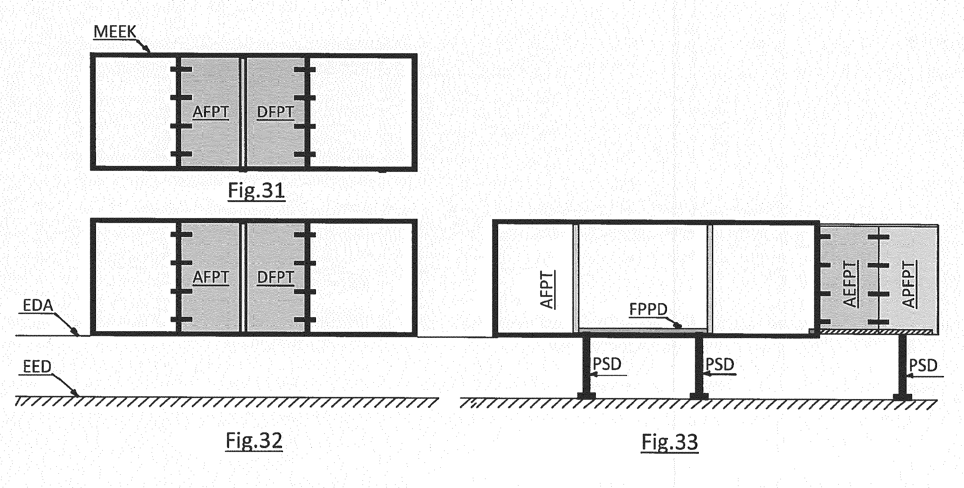

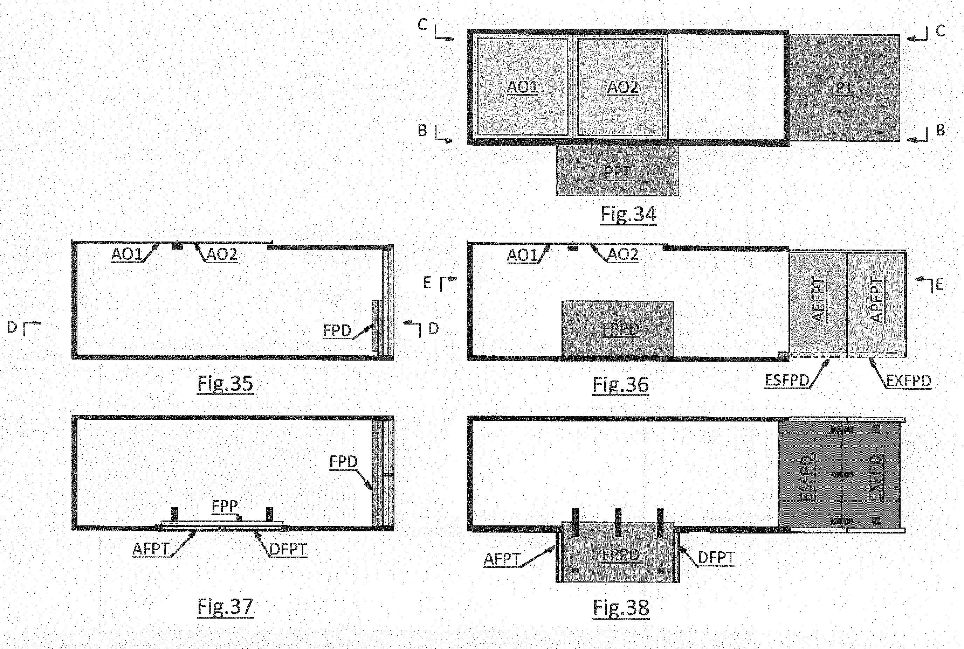

Also, in a particular variant of the Laboratory of the invention can be added a foldable extending floor and inner foldable leaves at the side double-leaf door, in accordance with the attached drawings Fig. 33 to Fig. 38. The purpose of this variant will be the capability for the laboratory to have (when needed) a foldable covered area in front of the side double-leaf door, in order to facilitate the process of multiple (1^{st} stage / 2^{nd} stage etc.) compressions (by creating a solid residue deposit for further processing) and to prevent rain water entering into the main processing area (Hydraulic Press /YP room) during days of heavy rainfall.

Also, in a particular variant of the Laboratory of the invention, a foldable electric winch can be added whose arm will suitably be supported on the roof of the rear door, and with its extension loading of the raw material will be assisted the to the level of the side folding floor.

Also in a particular variant of the Laboratory of the invention, the paste storage tanks may be cooled, in order for the pastes to be transferred to the paste processing plants, avoiding decay of its qualitative characteristics.

Also, in a particular variant of the method of the invention, there is the possibility for the laboratory to be equipped with a heat pump to continuously maintain the temperature at levels below 27 ° C inside both (a) of the process area and (b) the paste storage tanks.

Finally, in particular variant of the Laboratory of the invention, the container may be of varying length (depending on the desired processing capacity), from the three meters to the maximum allowed for road transport, wherein in these variants it is possible to install more than one hydraulic presses (YP) as well as more than four paste daily storage tanks.

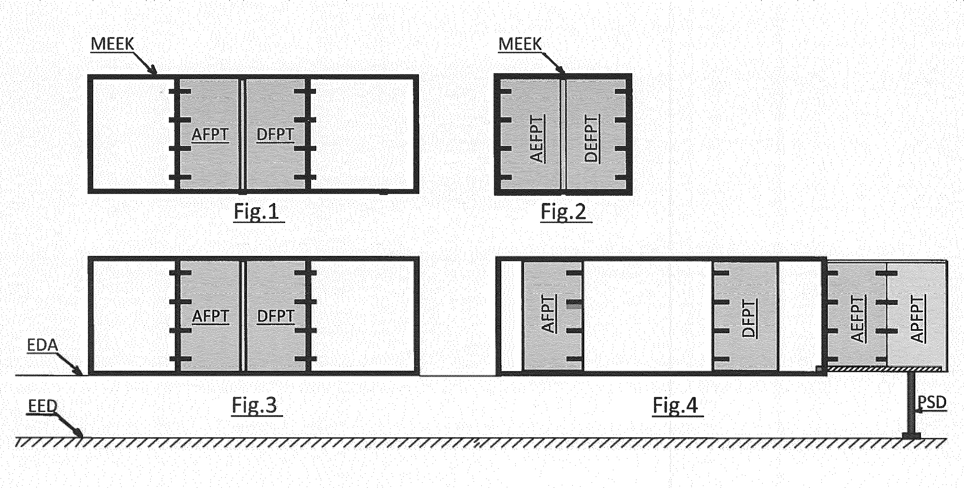

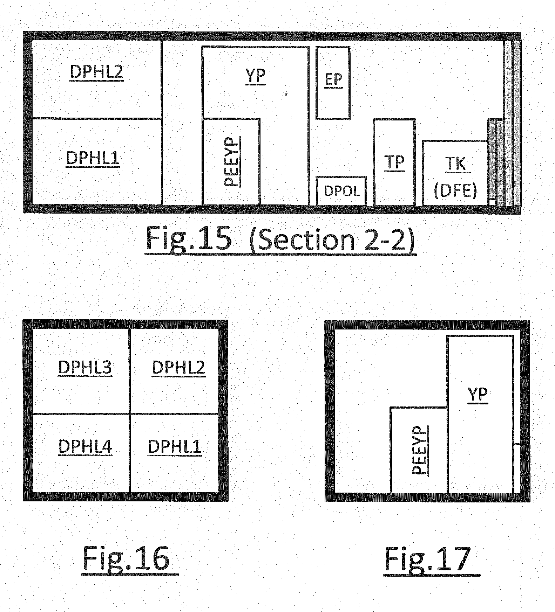

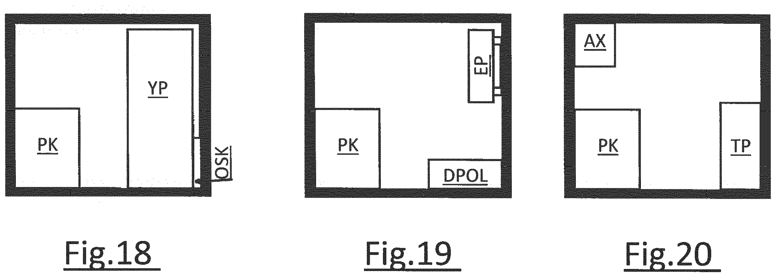

The understanding of the invention will be made possible through the presented indicative plans of front/top &side views and sections (Fig. 1 to Fig. 38) as well as the production diagrams (Fig. 39 and Fig. 40).
The coding of the Equipment, Machinery and other components constituting the movable laboratory, as used in Figures 1 to 40, is as follows:
(MEEK): Metal container.
(AFPT): Left side door leaf.
(DFPT): Right side door leaf.
(AEFPT): Left rear door external leaf.
(DEFPT): Right rear door external leaf.
(APFPT): Left foldable rear door leaf.
(DPFPT): Left foldable rear door leaf (not shown in the drawings)
(ESFPD): Internal foldable floor panel (for rear door)
(EXFPD): External Foldable Floor Panel (for rear door)
(FPD): Foldable Floor Panels (for rear door)
(FPPD): Foldable Floor Panels (for side door)
(AFTG): Generator room left door leaf
(DFTG): Generator room right door leaf
(PSD): Foldable floor stand (foldable floors)
(AO1): Roof opening (for tanks)
(AO2): Roof opening (for hydraulic press)
(PT): Foldable tent (for rear door)
(PPT): Foldable tent (for side door)
(YP): Hydraulic press
(PEEYP): Platform for input and output solid organic matter of hydraulic press
(PK): Fruit washing machine
(MPK): Shifted fruit washing machine (during operation)
(TK): Fruit shredder
(MTK): Shifted fruit shredder
(DFE): Olive leaf separator
(MDFE): Shifted olive leaf separator
(AC): Storage area (Measuring & Quality Control Instruments, Tools & Documents)
(EP): Electrical Power Distribution Panel capable to be supplied by both an electric generator and a public electric network.
(EG): Electric Generator.
(DPOL): Hourly operation pulp storage tank
(DPHL1): Daily operation paste storage tank
(DPHL2): Daily operation paste storage tank
(DPHL3): Daily operation paste storage tank
(DPHL4): Daily operation paste storage tank
(OSK): Pipe & cable routing (suitably formed channels behind the press).
(BE): Basic choice (for the process of the product or residue).
(EE): Alternative choice (for process of the product or residue).
(KE): Olive Fruit
(KA): Avocado Fruit.
(FY): Inert matter.
(NP): Washing water
(SYS) : Solid Residues of Hydraulic Compression.
(MANP): Non-Recyclable Washing Water (after completion of the possible recycling number if recycling is desired)
(CO): Land / soil.
(TP&EKP): Thermal pasteurizer and debittering machine
(FB&BK): Pharmaceutical Industry / Cosmetics Industry
(MEK): Kernel oil extraction unit
(FEK): Medicines / Cosmetics
(ENZ): Organic enzymes for debittering of Olive Paste
(BT): Food industry.
(DP): Nutritional product.
(PYF): Pharmaceutical industry raw material
(ZO): Fodder
(KOY): Fruit kernel
(EK): Kernel oil
(EDA): Floor level.
(EED): Ground level.

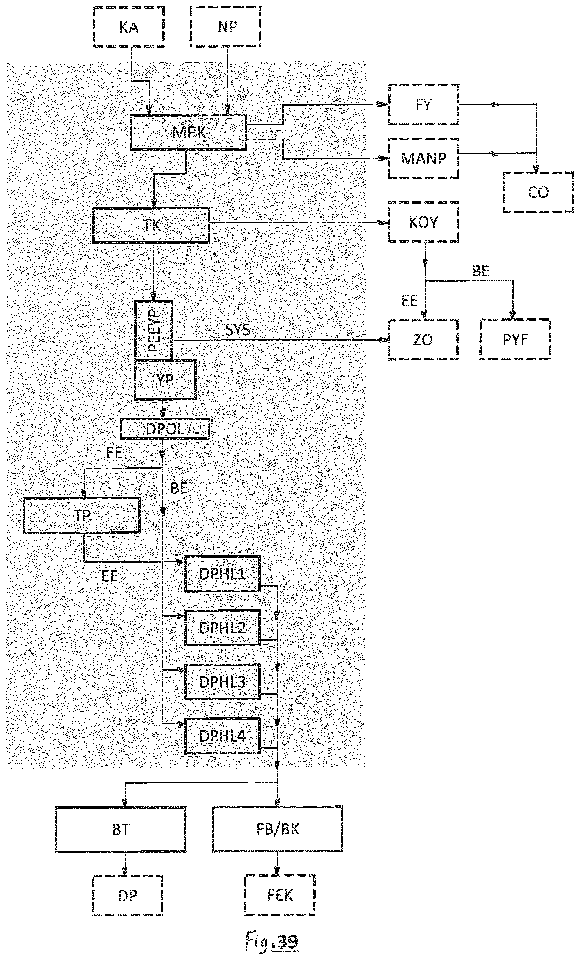

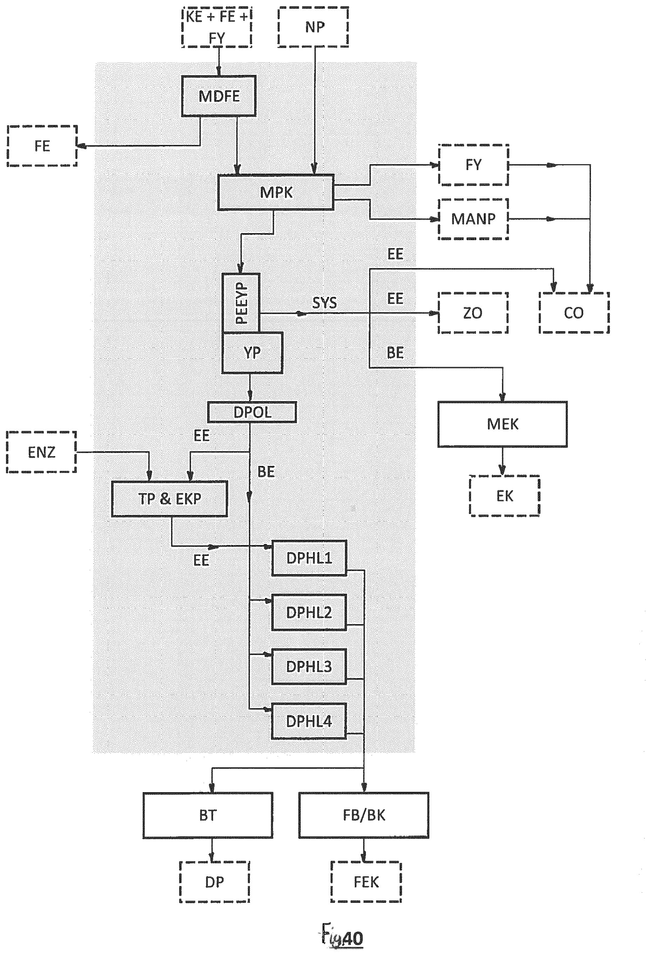

However, the invention is explained in more detail on the basis of two examples of the operation of the movable laboratory concerning the pasting of avocados (a process depicted in the diagram of Fig. 39), and olive pasting (a process depicted in the diagram of Fig. 40). Both processes use the same machines, except that avocados pasting is using a fruit shredder (TK) while olive pasting is using a leaf separator (DFE).
The drawings referring to avocado and olive pasting are the arrangements / views & sections in the drawings in Fig. 1 to Fig. 20, the Diagrams Fig. 39 and Fig. 40 as well as the views & sections for the variation with the Electric Generator in the drawings Fig. 21 to Fig. 30. For these figures we have following descriptions and clarifications :
Fig. 1: Left side view of the metal container (MEEK) according to the invention , showing the double-leafed side door with leaves (AFPT) & (DFPT), which is primarily used for extracting solid residues.
Fig. 2: Rear view of the metal container according to the invention, showing the double-leafed door with leaves (AEFPT) & (DEFPT), which is primarily used for the input of the raw material (olive fruits KE and avocado fruits KA for the examples) as well as the extension of the door leaves (APFPT, APFPT, DPFPT & DPFPT) and the floor (ESFPD) & (EXFPD), to expand the active processing area of the laboratory.
Fig. 3: Similarly to Fig. 2, the right side view of the metal container is shown with the double-leaf door closed as it will be during the truck transport phase, having the floor level (EDA) of the laboratory elevated relative to the ground level (EED).

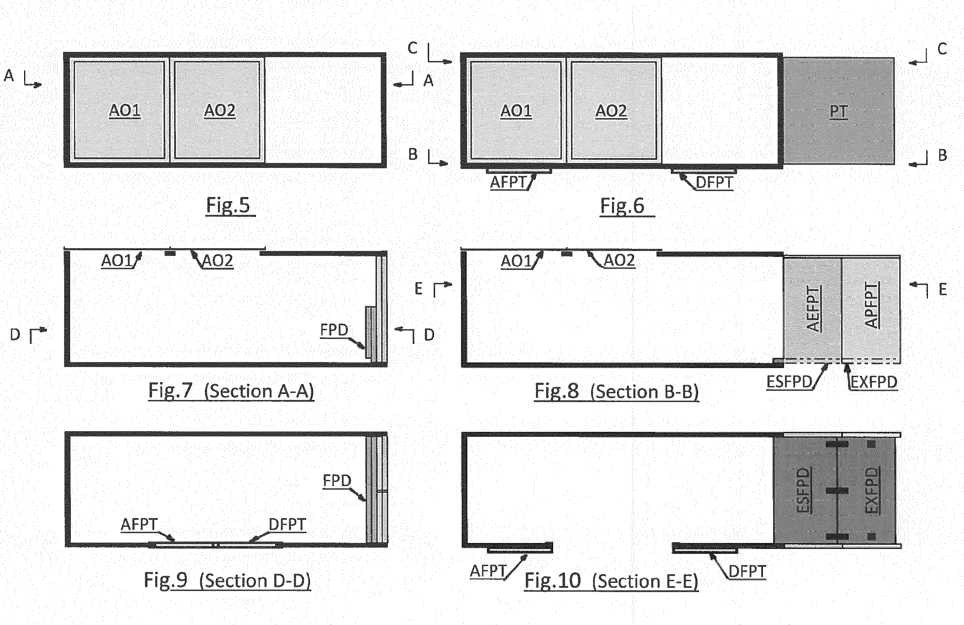

Fig. 4: Similarly to Fig. 3, the side view of the container is shown with the side and back doors open, as they will be during the operation of the laboratory being elevated relative to the ground on the truck platform / trailer. The drawing reveals the extension of the internal foldable leaf (APFPT) of the left side leaf AEFPT of the rear double-leaf door. The purpose of the special design of the rear door leaves is to attach a second modular inner leaf/panel, which constitutes an increase of the active processing area of the laboratory in cooperation with the extension of the internal modular floor panels (Fig. 10 to Fig. 12) on one hand and on the other hand with the extension of the fabric or plastic roof cover (PT) (Fig. 6).
Fig. 5: Bottom view of the roof of the metal container with the two openings (AO1) & (AO2) which serve to enable the placement and removal (repairs and planned maintenance phases) of the paste tanks (DPHL1) / (DPHL2) / (DPHL3) / (DPHL4) for opening (AO1) as well as the hydraulic press (YP) for opening (AO2).
Fig. 6: are shown the same with Fig. 5 and furthermore the foldable fabric or plastic tent (TP) which serves to cover the space formed by the extended inner and outer leaves of the rear double-leaf door (Fig. 4) as well as the foldable floor (Fig. 10 to Fig. 12).
Fig. 7: Vertical Section A-A (with reference to Fig. 5) of the container where are shown (a) the roof openings (AO1) and (AO2) and (b) the metal panels of the foldable floor (FPD).
Fig. 8 : Vertical Sections B-B and C-C (with reference to Fig. 6) of the container where (a) on Section B-B is shown the extension of the left foldable inner leaf (APFPT) and left outer leaf (AEFPT) of the rear double-sided door as well as the extension of the foldable panels (ESFPD) & (EXFPD) of the metal floor of the rear double-leaf door (b) the Section C-C will be similar to Section B-B with the difference that instead of (APFPT) and (AEFPT) it would be shown (DPFPT) and (DEFPT) accordingly.
Fig. 9: Horizontal Section D-D (with reference to Fig. 7) of the closed metal container where are shown (a) the closed panels (FPD) of the foldable metal floor (b) the closed leaves (AFPT) & (DFPT) of the left double-leaf door and (c) the closed inner and outer leaves of the rear double-leaf door.
Fig. 10: Horizontal Section E-E (with reference to Fig. 8) of the metal container where are shown (a) the extended leaves (AFPD) & (DFPD) of the left double-leaf door (b) the extended panels (ESFPD) & (EXFPD) of the foldable floor and (c) the extended leaves (outer and foldable inner) of the rear double-leaf door.

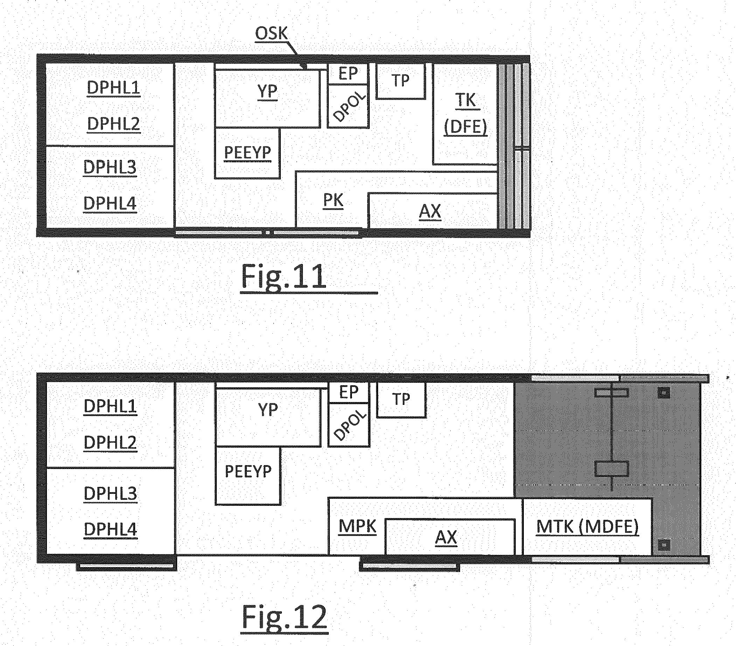

Fig. 11: Horizontal section of the interior of the Laboratory's Machinery and Equipment with closed doors, which constitutes the state of road transport by truck. During this phase, the Fruits Washing Machine (PK) and Fruit Shredder (TK) or (DFE) may be displaced from the position they will have during the operating phase.
Fig. 12: Horizontal section of the internal layout of the Machinery and Equipment of the Laboratory during the operation / fruit pasting phase, where the floor of the laboratory is elevated relative to the ground level. During this phase the sacks or fruit crates are deposited on the foldable metal floor and from there they are led to the washing machine (PK) (or DFE for the case of olives) for removal of inert matter. After washing, the fruits with oily flesh are led to the Fruit Shredder (TK) for removal of kernel (KOY) (for the case of avocados). From there the fruits (sliced without Kernel in case of Avocado fruits) are loaded into the stainless steel compression cylinder (with normally arranged holes and / or slots all over its surface), located on the (PEEYP) input/output platform of the solid material of the hydraulic press (YP), from where it is led under the hydraulic press piston for direct compression. During compression the flesh is pulverized as it passes through the very narrow slots / holes of the compression cylinder and is collected in the hourly pulp tank (DPOL). From there the solid residue is extracted from the perforated/slotted compression bucket/cylinder and removed from the laboratory via the double-leaf door, disposed to the field. There will be two possibilities for the produced pulp (A) that of the pasteurization within the laboratory (with a previous debittering in the case of olive pulp using organic enzymes to reduce the concentration of Oleuropein) and storage in the daily tanks and (B) that of direct storage in daily tanks with further processing taking place in the Food Industries and the Cosmetics and Pharmaceutical Industries. Thus, in the daily tanks (DPHL1) / (DPHL2) / (DPHL3) / (DPHL4) it is possible to store either pulp or paste depending on the kind and quality of the desired product.
   The Electric Power Distribution Panel (EP) will be constructed for dual power supply from both the public electric network (if available in the fields of fruit trees) but also from the Electric Generator.

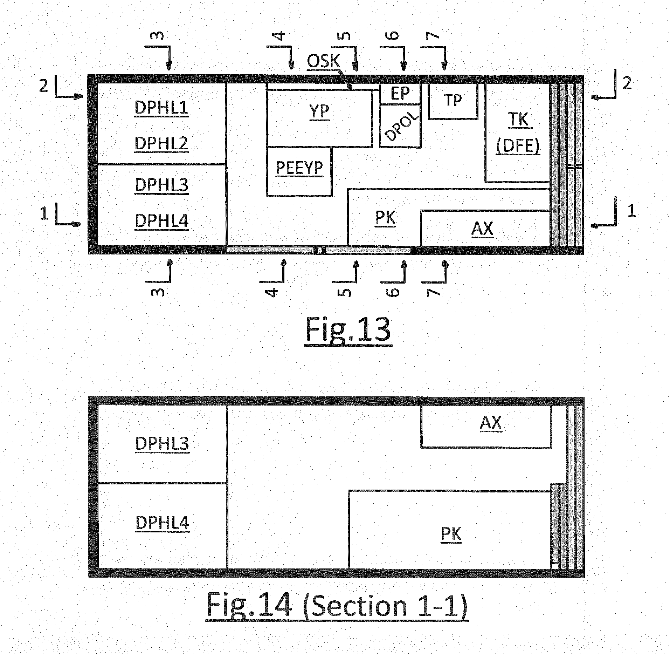

Fig. 14 to Fig. 20: vertical and horizontal sections 1-1 to 7-7 (with reference to Fig. 13) on the layout of the Machinery and Equipment of the laboratory during the road transport phase.
Fig. 21 to Fig. 30: show a variant of the basic Machinery and Equipment layout of the Laboratory of the invention, whereby is sacrificed the capacity of pulp or paste storage tanks, giving the laboratory the opportunity to have in its equipment (housed within the metal container) also the necessary electric generator. This since in the basic configuration of the Laboratory of the invention , has been considered that the necessary electrical generator will be transported by road from a different vehicle (loaded or trailer) or from the same vehicle that carries the movable Laboratory but out of it.
Fig. 39: constitutes the production diagram of the avocado (fruit with oily flesh) pasting process, in which the qualitative and environmental advantages of the present invention are evident where (a) we have pulping of the flesh by means of hydraulic compression, avoiding the use of rotating mechanisms such as compression screws / cutters and scraper drums, which mechanisms cause a significant degrading effect of atmospheric air on the quality characteristics of the pulps (b) we have the avoidance / bypassing of the peel removal process (as it is retained within the compression cylinder) with a significant benefit in increasing the pulp production processing efficiency by gross weight of fruit (c) due to hydraulic compression we have the ability to produce a paste with an oil content that has not diminished its quality characteristics as the whole process takes place at temperatures below 27° C (d) we have the possibility of drastically reducing the time of the pasteurization, since the whole process can take place in the fields of fruit trees (e) we have the possibility of returning the solid residue to the field as a fertilizer or for animal feed and (f) we have the disposal of washing water directly in the field for irrigation rather than its disposal to the Municipal Drainage System.
Fig. 40: constitutes the production diagram of the olive fruit pasteurization process in which the qualitative and environmental advantages of the present invention are evident where (a) we have the pulping of the flesh by means of hydraulic compression, avoiding the use of rotating mechanisms such as compression screws / cutters and scraper drums, which mechanisms cause a significant degrading effect of atmospheric air on the quality characteristics of the pulps (b) due to hydraulic compression we have the ability to produce a paste with an oil content whose qualitative characteristics have not been diminished , as the whole process takes place at temperatures below 27° C (c) we have the ability to produce olive paste without the use of brine or salt, since debittering takes place after the pulping with the use of organic enzymes and not before using brine (d) we have the ability to produce olive paste in just a few hours instead of the several weeks required by the salting process (debittering in brine) (e) we have the avoidance / bypassing of the peel removal process (as it is retained within the cylinder) with a significant benefit in increasing the pulp production processing efficiency by gross weight of fruits (f) we avoid the environmental problems caused by debittering of olive fruits in brine as regards the management of saline water after rinsing the salt from the olives, but also the large consumption of water during the washing of the olive fruits for rinsing of the salt from their peel (g) we have the ability to utilize the solid residues of compression (SYS) by kernel oil extraction units (MEK) for organic oil production, since when compressing the olive fruits with having the retention of the peel we can avoid the break of the kernel (h) we have the possibility of returning the solid residue to the field as a fertilizer or for animal feed and (i) we have the fruit washing water disposed directly to the field for irrigation rather than its disposal to the Municipal Drainage System.

## Claims

1. Pasting method of fruits with oily flesh, in their production site, by which is given the ability (a) to have pulping of fruit flesh by means of hydraulic compression and not by rotating mechanisms of screw compression / shredding or scraping of the flesh (b) to produce cold pressed pulps and pastes at temperatures constantly below 27° C (c) to produce olive paste without the use of brine or salt, since debittering can take place immediately after the pulping, using organic enzymes (d) to produce olive paste in just a few hours (including the harvesting time) instead of several weeks that are required as time by the debittering method of immersing olives in brine (e) to avoid the processing phase of removing the peel for all categories of fruits, by retaining the peel inside the perforated/slotted compression cylinder (f) to avoid the environmental problems caused by debbitering of olive fruits in brine , as regards the management of saline water after washing the debittered olives but also the large consumption of water during the washing of the debittered olives.

2. Pasting method of fruits according to claim No. 1, by which the solid residues of the pasting process of fruits with small kernel such as olives fruits, can be utilized by oil extraction units (MEK) for the production of precious organic oils from the kernel core.

3. Complete, by road movable laboratory pasting fruits with oily flesh , housed in an appropriately designed metal container (MEEK) (with roof openings A01 & AO2, inner foldable door leaves APFPT & DPFPT, foldable tent (PT) and foldable floor ESFPD & EXFPD), and equipped with suitably arranged electrically powered and power assisted machinery (YP, TK, DFE, PK), and paste tanks (DPOL, DPHL1, DPHL2, DPHL3, DPHL4) able to (a) to produce paste and pulp from any type of fruit with oily flesh by the method of hydraulic direct cold press according to Claim No. 1 (b) to be transported (self-moving or by trailer) and to be installed in the fields of fruit trees (c) to contribute to the drastic reduction in the time of the pasting process, since the whole procedure according to the method of Claim No. 1 may take place in the fields of fruit trees (d) to contribute to the disposal of the solid residues to the fields as a fertilizer or for animal feed (e) to contribute to the disposal of the washing water directly to the field for irrigation avoiding its disposal to the Municipal Drainage System (f) to require for its operation only the connection of its Electrical Power Distribution Panel (EP) to an external electric generator or to the fixed electric network of the electricity provider.
